# EUROPÄISCHE PATENTANMELDUNG

(11) **EP 2 120 314 A1**
(43) Veröffentlichungstag der Anmeldung: **18.11.2009**
(21) Anmeldenummer: 08009136.6
(22) Anmeldetag: 16.05.2008
(51) Int. Cl.: H02K 3/24

(54) **Rotorkühlung für eine dynamoelektrische Maschine**

(71) Anmelder: SIEMENS AKTIENGESELLSCHAFT, 80333 München (DE)
(72) Erfinder: Adolf, Haiko, Dr., 99099 Erfurt (DE)

(57) **Zusammenfassung**

Die Erfindung betrifft einen Rotor (2) für eine dynamoelektrische Maschine (1), wobei der Rotor (2) einen Nutgrundkanal (12) zum Kühlen von am Rotor (2) angeordneten Leitern (4) aufweist, wobei der Nutgrundkanal (12) an einer mit hohen Temperaturen beanspruchten Stelle des Rotors (2) einen V-förmigen Verlauf aufweist.

## Beschreibung

Die Erfindung betrifft einen Rotor für eine dynamoelektrische Maschine, wobei der Rotor einen Grundkanal zum Kühlen von am Rotor angeordneten Leitern aufweist.

Unter einer dynamoelektrischen Maschine ist u. a. ein Generator oder ein Motor zu verstehen. Die vorliegende Anmeldung bezieht sich vorzugsweise auf Generatoren, wobei die Erfindung auch auf andere elektrische Maschinen anzuwenden ist. Generatoren für die kommunale Energieversorgung weisen eine Leistungskapazität von mehreren hundert MVA auf. Generatoren weisen im Wesentlichen einen Rotor und einen um den Rotor angeordneten Ständer auf. Sowohl der Rotor als auch der Ständer weisen Leiter auf, durch die ein elektrischer Strom fließt. Diese elektrischen Ströme sind vergleichsweise hoch und verursachen eine starke Erwärmung der Leiter. Die Leiter, insbesondere im Rotor müssen deswegen gekühlt werden. Dafür werden im Wesentlichen drei Kühlungsmedien verwendet bzw. eingesetzt. Es kann beispielsweise Luft, Wasserstoff oder Wasser als Kühlungsmedium eingesetzt werden.

Die elektrischen Leiter in den Rotoren werden in so genannte Nuten eingebettet, wobei zwischen dem elektrischen Leiter und dem Rotorgrundkörper ein Grundkanal ausgebildet ist. Dieser Grundkanal wird gemäß dem Stand der Technik als ein Kanal mit konstantem Querschnitt ausgebildet.

Zur Kühlung wird das Kühlmedium an einem Ende durch den Grundkanal geleitet, wobei der Grundkanal in der Regel Radialkanäle aufweist, die in Richtung der Leiter gerichtet sind. Das Kühlmedium strömt zunächst durch den Grundkanal und anschließend durch die Radialkanäle zu den zu kühlenden Leitern. Aufgrund eines physikalischen Effektes, der durch die so genannte Bernoulli-Gleichung beschrieben wird, sind die Geschwindigkeit und der Druck des Kühlmediums am Eingang des Grundkanals unterschiedlich zu dem Druck und der Geschwindigkeit des Kühlmediums in der Mitte des Läufers im Grundkanal. An der Rotorstirn ist durch die hohe Strömungsgeschwindigkeit im Grundkanal die Abzweigung in die Radialkanäle schwierig. Dadurch kommt es zu einer schlechten Weiterführung des Kühlmediums an der Rotorstirn in die Radialkanäle. Wohingegen in der Generatormitte eine vergleichsweise gute Weiterführung des Kühlmediums in die Radialkanäle möglich ist, da die Strömungsgeschwindigkeit in der Läufermitte vergleichsweise gering ist. Dadurch ist die Kühlleistung in axialer Richtung unterschiedlich. Die Rotorstirn wird vergleichsweise schlechter gekühlt als die Rotormitte.

In bisherigen Ausführungsformen von Radialkühlungsmöglichkeiten der Läuferwicklung für dynamoelektrische Maschinen wie z.B. eines Synchronturbogenerators basieren im Wesentlichen auf gleichmäßig angeordnete Radialkühlschlitze, die von dem Grundkanal mit einem Kühlmedium gespeist werden. Im Bereich der Läuferballenstirn treten allerdings unerwünscht hohe Temperaturen auf, die sich im Wesentlichen auf zwei physikalische Aspekte zurückführen lassen. Zum einen verursacht die hohe im Betrieb auftretende Axialgeschwindigkeit einen niedrigen statischen Luftdruck, der in einigen Radialkanälen die Förderung des Kühlmediums behindert. Zum anderen können im Bereich des Kappenschrumpfsitzes keine Radialkanäle angeordnet werden.

Eine Möglichkeit, unzulässige Temperaturen im Betrieb zu vermeiden bestand bisher darin, den Erregerstrom zu begrenzen, was allerdings dazu führt, dass die Leistung des Turbogenerators begrenzt wird.

Wünschenswert wäre es eine Möglichkeit zu haben, im Bereich des Kappenschrumpfens eine gute Kühlmöglichkeit zu haben.

An dieser Stelle setzt die Erfindung an, deren Aufgabe es ist, eine wirksame Kühlung für eine Läuferwicklung im Bereich des Kappenschrumpfsitzes anzugeben.

Gelöst wird diese Aufgabe durch einen Rotor für eine dynamoelektrische Maschine, wobei der Rotor einen Grundkanal zum Kühlen von am Rotor angeordneten Leitern aufweist, wobei der Grundkanal einen Sonder-Kühlbereich aufweist, wobei der Grundkanal im Sonder-Kühlbereich eine V-Form aufweist.

Mit der Erfindung wird somit vorgeschlagen, statt einem geradlinig ausgeführten Nutgrundkanal einen geänderten Strömungspfad zuzulassen. Dieser Strömungspfad soll einem V ähneln. Das Strömungsmedium strömt zunächst in einer im Wesentlichen axialen Richtung, die parallel zur Rotationsachse angeordnet ist. Diese axiale Strömungsbewegung wird im Sonder-Kühlbereich in die radiale Richtung abgelenkt. Anschließend wird an einem Umkehrpunkt die Strömungsrichtung umgelenkt und wieder zum Grundkanal zurückgeführt. Der Strömungsverlauf des Strömungsmediums ähnelt daher einem umgekehrten V. Durch die Integration des V-förmigen Kühlkanals im Sonder-Kühlbereich führt dies zu einer deutlichen Reduktion der maximalen Temperatur der Läuferwicklung.

Damit das Kühlmedium möglichst verlustfrei durch den Sonder-Kühlbereich strömt sind im Wesentlichen zwei physikalische Effekte als Antriebsmechanismus zu berücksichtigen. Zum Einen führt eine Druckdifferenz zwischen dem Eingang und dem Ausgang an den Enden des Nutgrundkanals zu einer resultierenden Druckdifferenz, die zu einer Bewegung des Kühlmediums führt. Zum Anderen entsteht durch die Fliehkraftdifferenz des einströmenden und relativ kalten Kühlmediums mit hoher Gasdichte und des erwärmten Kühlmediums mit niedriger Gasdichte zu einem Thermo-Siphon-Effekt. Das bedeutet, dass durch unterschiedliche Wärme- und Dichteverteilungen eine Konvektionsströmung durch den V-förmigen Kühlkanal erfolgt.

In den Unteransprüchen sind vorteilhafte Weiterbildungen angegeben.

So ist es vorteilhaft, wenn der Nutgrundkanal einen in axialer Richtung ausgebildeten Axialbereich, einen an den Axialbereich anschließenden gegen die axiale Richtung in radialer Richtung gebogenen ersten Konvexbereich, einen an den ersten Konvexbereich anschließenden Konkavbereich und einen an den Konkavbereich anschließenden zweiten Konvexbereich aufweist, wobei der zweite Konvexbereich derart ausgebildet ist, dass der Nutgrundkanal aus einer radialen Richtung in eine axiale Richtung geändert wird. Der erste Konvexbereich, der zweite Konvexbereich und der Konkavbereich sind hierbei derart ausgebildet, dass das Kühlmedium mit geringst möglichen Verlusten durch den Kühlkanal im Sonder-Kühlbereich strömen kann.

In einer vorteilhaften Weiterbildung weist die V-Form des Kühlkanals einen ersten Steigkanal auf, der unter einem Winkel α zwischen 25° und 75° gegen die Rotationsachse geneigt ist. Es hat sich gezeigt, dass dieser Winkel optimal ist, um eine verlustfreie Strömung des Kühlmediums zu erreichen.

Der Winkel α kann auch Werte annehmen zwischen 35° und 65° sowie 45° und 55°.

In einer weiteren vorteilhaften Weiterbildung weist der Kühlkanal einen zweiten Absteigkanal auf, der unter einem Winkel von β von 25° bis 75° angeordnet ist. Dieser Winkelbereich ist dahingehend optimiert, dass das Kühlmedium verlustarm durch den Kühlkanal strömt.

Ausführungsbeispiele der Erfindung werden nachfolgend anhand der Zeichnungen beschrieben. Diese sollen das Ausführungsbeispiel nicht maßstäblich darstellen, vielmehr sind die Zeichnungen, wozu die Erläuterungen dienen, in schematischer und/oder leicht versetzter Form ausgeführt. Im Hinblick auf Ergänzungen der aus den Zeichnungen unmittelbar erkennbaren Lehren wird auf den einschlägigen Stand der Technik verwiesen. Komponenten mit ähnlicher Wirkungsweise weisen dasselbe Bezugszeichen auf.

### Es zeigen:

- Figur 1: eine Ansicht eines Teils eines Rotors,
- Figur 2: eine schematische Darstellung des Nutgrundkanals im Rotor,
- Figur 3: eine schematische Darstellung eines Ausschnitts des Rotors,
- Figur 4: eine schematische Darstellung eines weiteren Ausschnitts des Rotors,
- Figur 5: eine schematische Darstellung eines weiteren Ausschnitts des Rotors,
- Figur 6: eine schematische Darstellung eines weiteren Ausschnitts des Rotors.

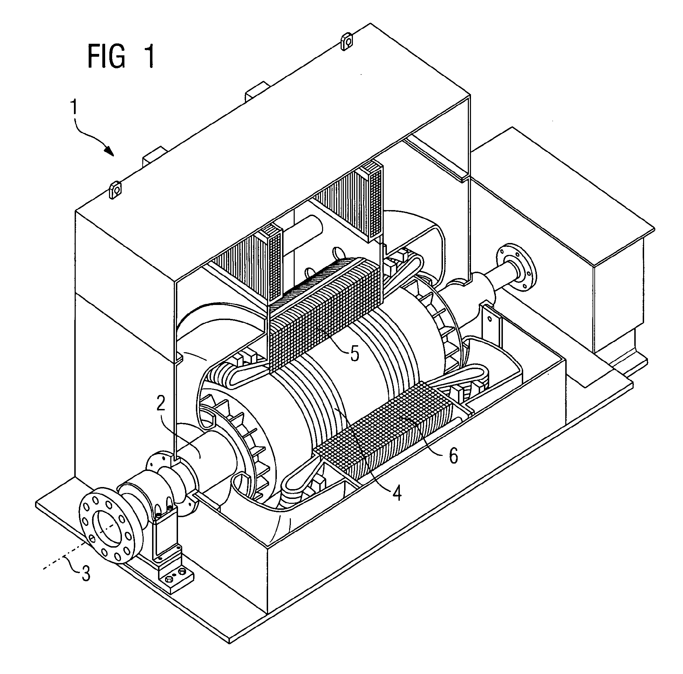

In der Figur 1 ist eine perspektivische Darstellung eines Generators 1 zu sehen. Der Generator 1 ist als Ausführungsbeispiel einer dynamoelektrischen Maschine zu sehen. Ein weiteres Beispiel einer dynamoelektrischen Maschine wäre ein elektrischer Motor. Der Generator 1 umfasst im Wesentlichen zwei Bauteile. Ein Rotor 2 ist um eine Rotationsachse 3 drehbar angeordnet. Der Rotor 2 umfasst mehrere in axialer Richtung ausgerichtete Leiter 4 auf. Die elektrischen Leiter 4 werden über nicht näher dargestellte Erregerstromzuführungen mit einem Erregerstrom gekoppelt. Dadurch entsteht ein magnetisches Feld um den Rotor 2. Der Rotor 2 wird durch nicht dargestellte Dampf- oder Gasturbinen in Drehung versetzt. Die Drehfrequenz liegt hierbei in der Regel bei 50 bzw. 60 Hz.

Um den Rotor 2 ist ein Ständer 5 angeordnet, der eine Ständerwicklung 6 aufweist. In der Ständerwicklung 6 wird durch das rotierende Magnetfeld des Rotors 2 eine elektrische Spannung induziert, die in ein Hochspannungsnetz anschließend eingespeist wird. Die in den Leitern 4 strömenden elektrischen Erregerströme sind vergleichsweise hoch, so dass die dadurch entstehende Wärmeentwicklung durch Kühlung verringert werden muss.

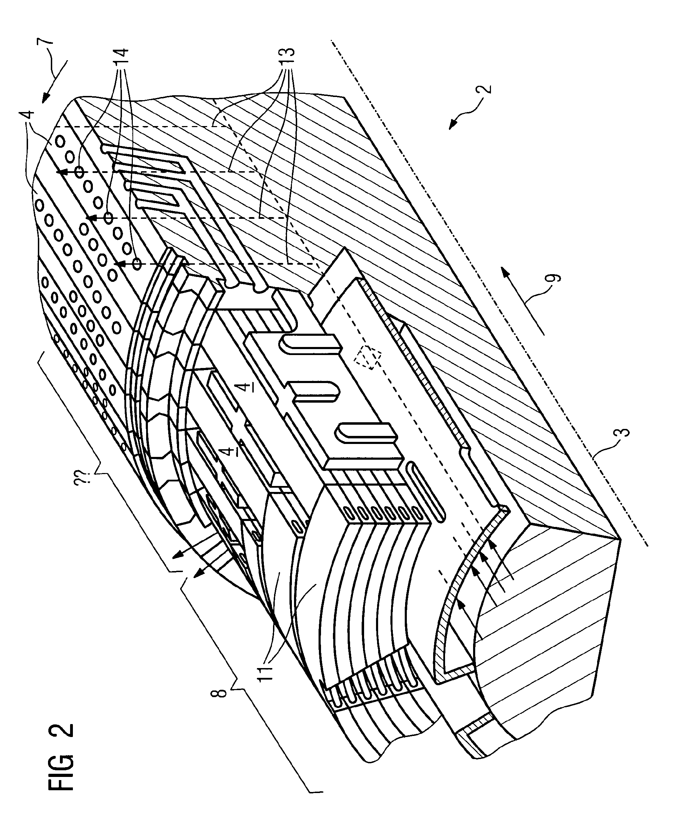

Die Figur 2 zeigt einen Ausschnitt des Rotors 2. Der Rotor 2 umfasst mehrere in einer Umfangsrichtung 7 angeordnete elektrische Leiter 4. Der Rotor 2 weist stirnseitig einen Wickelkopf 8 auf, der neben in axialer Richtung 9 angeordnete elektrische Leiter 4 auch in radialer Richtung 10 angeordnete elektrische Querleiter 11 aufweist.

Die elektrischen Leiter 4 werden in einer nicht näher dargestellten Nut im Rotor 2 angeordnet. Unterhalb der Leiter 4 ist ein Nutgrundkanal 12 ausgebildet. Durch den Nutgrundkanal 12 strömt im Betrieb ein Kühlmedium wie beispielsweise Kühlluft oder Wasserstoff. Der Nutgrundkanal 12 erstreckt sich entlang der Rotationsachse 3 in axialer Richtung 9. Die Leiter 4 weisen in axialer Richtung 9 radiale Kühlbohrungen 13 auf. Im Betrieb strömt Kühlluft durch den Nutgrundkanal 12 in die Radialkühlbohrungen 13 und am Auslass 14 aus dem elektrischen Leiter 4 heraus.

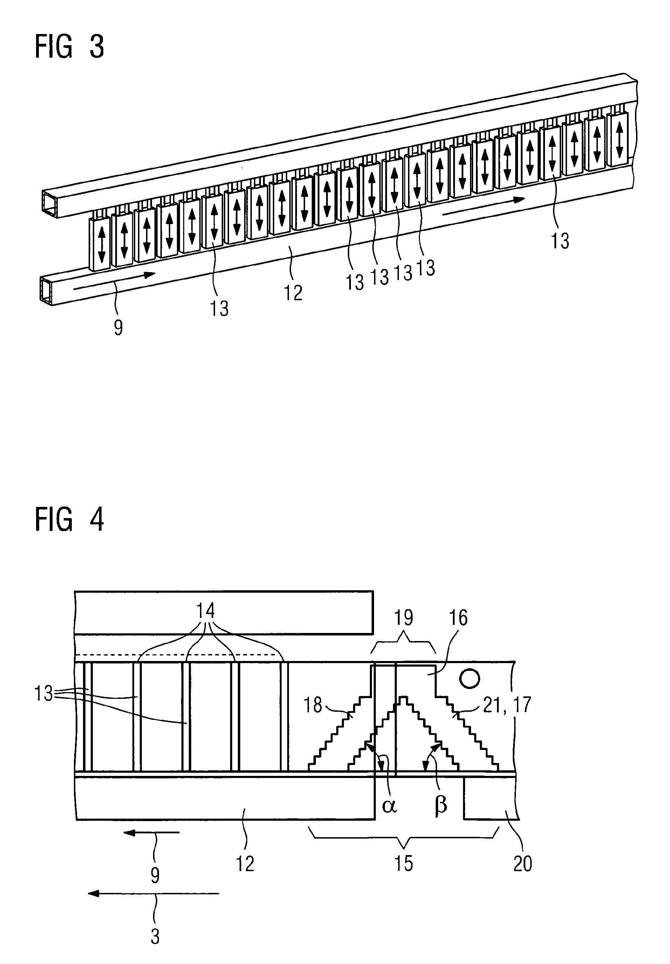

In der Figur 3 ist in schematischer Weise dargestellt, wie ein Kühlmedium in der axialen Richtung 9 im Nutgrundkanal 12 strömt und in die Radialkühlbohrungen 13 umgelenkt wird.

Um zu hohe Temperaturentwicklungen im Wickelkopf 8 zu vermeiden wird im Bereich des Kappenschrumpfsitzes in einem Sonder-Kühlbereich 15 die Geometrie des Nutgrundkanals 12 geändert, was in der Figur 4 dargestellt ist. Der Nutgrundkanal 12 weist im Bereich des Sonder-Kühlbereiches im Seitenquerschnitt gesehen eine V-Form 16 auf. Der Nutgrundkanal 12 weist hierbei einen ersten Steigkanal 17 auf, der unter einem Winkel α zwischen 25° und 75° gegen die Rotationsachse geneigt ist. Des Weiteren weist der Nutgrundkanal 12 einen zweiten Abstiegskanal 18 auf, der unter einem Winkel β zwischen 25° und 75° gegen die Rotationsachse 3 geneigt ist. Das zunächst in axialer Richtung 9 strömende Kühlmedium strömt zunächst in den ersten Steigkanal 17, wird an einem Umkehrpunkt 19 umgelenkt und strömt über den zweiten Absteigkanal 18 weiter im geradlinig verlaufenden Nutgrundkanal 12.

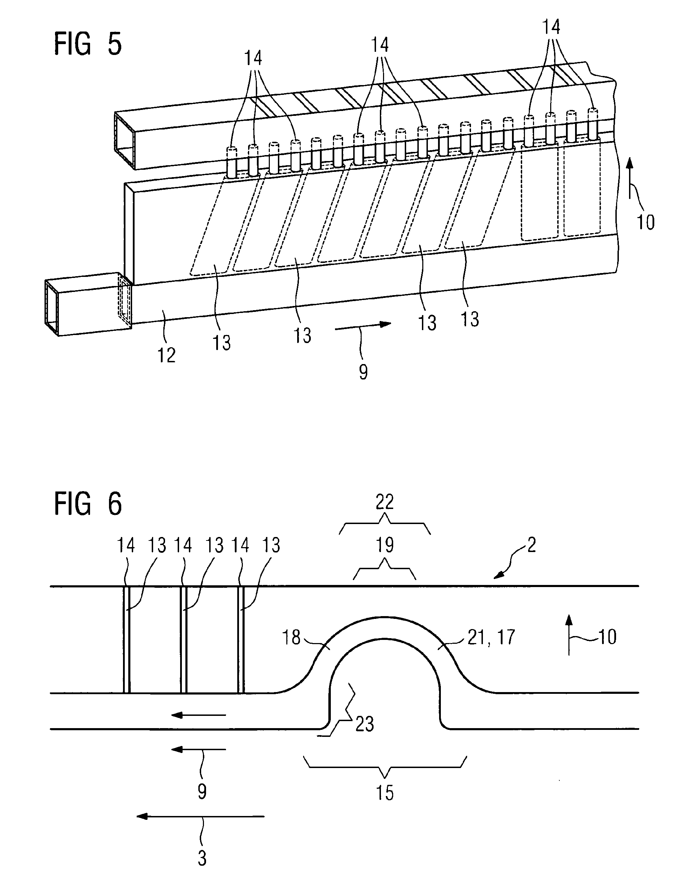

Die Figur 6 zeigt einen Ausschnitt des Rotors 2 in einer alternativen Ausführungsform. Der Unterschied zu der Ausführungsform gemäß Figur 4 liegt im Wesentlichen darin, dass die Geometrie des Nutgrundkanals 12 im Sonder-Kühlbereich 15 unterschiedlich ausgeführt ist.

Der Nutgrundkanal 12 weist hierzu zunächst einen Axialbereich 20 auf. An den Axialbereich 20 schließt ein gegen die axiale Richtung 9 geneigter erster Konvexbereich 21 an. Der erste Konvexbereich 21 ist konvex ausgebildet, d.h., dass dieser Bereich eine Kurve beschreibt, die eine Neigung von der radialen Richtung 10 gesehen, in die axiale Richtung 9 aufweist. Am Umkehrpunkt 19 ist an dem ersten Konvexbereich 21 ein Konkavbereich 22 angeordnet. Im Konkavbereich 22 ändert sich die Strömungsrichtung des Kühlmediums von der radialen Richtung 10 in die axiale Richtung 9 und von der axialen Richtung 9 wieder in die radiale Richtung 10.

An den Konkavbereich 22 schließt ein zweiter Konvexbereich 23 an. Im zweiten Konvexbereich 23 ändert sich die Strömungsrichtung des Kühlmediums von der radialen Richtung 10 wieder in die axiale Richtung 9.

In der Figur 5 ist eine alternative Ausführungsform der Radialkühlbohrungen 13 dargestellt. Die Radialkühlbohrungen 13 sind hierbei nicht streng in radialer Richtung 10 ausgerichtet. Die Ausrichtung der Radialkühlbohrungen 13 ist vielmehr unter einem Winkel gegen die radiale Bohrung 10 geneigt.

## Patentansprüche

1. Rotor (2) für eine dynamoelektrische Maschine,
wobei der Rotor (2) einen Nutgrundkanal (12) zum Kühlen von am Rotor (2) angeordneten Leitern (4) aufweist,
**dadurch gekennzeichnet, dass**
der Nutgrundkanal (12) einen Sonder-Kühlbereich (15) aufweist,
wobei der Nutgrundkanal (12) im Sonder-Kühlbereich (15) eine V-Form aufweist.

2. Rotor (2) nach Anspruch 1,
wobei der Rotor (2) um eine Rotationsachse (3) rotierbar ist,
und der Nutgrundkanal (12) im Seitenquerschnitt unterhalb der Rotationsachse (3) gesehen eine V-Form aufweist.

3. Rotor (2) nach Anspruch 1 oder 2,
wobei der Nutgrundkanal (12) einen in axialer Richtung ausgebildeten Axialbereich (20),
einen an dem Axialbereich (20) anschließenden gegen die axiale Richtung (9) in radialer Richtung (10) gebogenen ersten Konvexbereich (21),
einen an den ersten Konvexbereich (21) anschließenden Konkavbereich (22) und
einen an dem Konkavbereich (22) anschließenden zweiten Konvexbereich (23) aufweist,
wobei der zweite Konvexbereich (23) derart ausgebildet ist, dass der Nutgrundkanal (12) von der radialen Richtung (10) in die axiale Richtung (9) sich ändert.

4. Rotor (2) nach einem der vorhergehenden Ansprüche,
wobei der Sonder-Kühlbereich (15) im Bereich einer Heißpunktzone des Rotors (2) angeordnet ist.

5. Rotor (2) nach einem der vorhergehenden Ansprüche,
wobei die V-Form einen ersten Steigkanal (17) aufweist, der unter einem Winkel von α [25; 75] gegen die Rotationsachse (3) geneigt ist.

6. Rotor (2) nach einem der Ansprüche 1 bis 4,
wobei die V-Form einen zweiten Absteigkanal (18) aufweist, der unter einem Winkel von β [25; 75] gegen die Rotationsachse (3) geneigt ist.

7. Rotor (2) nach Anspruch 5 oder 6,
wobei der erste Steigkanal (17) geradlinig ausgeführt ist.

8. Rotor (2) nach Anspruch 5, 6 oder 7,
wobei der zweite Absteigkanal (18) geradlinig ausgeführt ist.
